# EUROPÄISCHE PATENTSCHRIFT

(11) **EP 2 565 593 B1**
(45) Veröffentlichungstag und Bekanntmachung des Hinweises auf die Patenterteilung: **07.10.2020**
(21) Anmeldenummer: 12005751.8
(22) Anmeldetag: 08.08.2012
(51) Int. Cl.: G01F 1/66, G01F 15/00

(54) **Ultraschallzähler**
Ultrasound meter
Compteur à ultrasons

(30) Priorität: 31.08.2011 DE 102011112028
(43) Veröffentlichungstag der Anmeldung: 06.03.2013
(73) Patentinhaber: Diehl Metering GmbH, 91522 Ansbach (DE)
(72) Erfinder: Göttler, Sandra, 91737 Ornbau (DE); Hofmann, Tino, 91413 Neustadt/Aisch (DE); Kroemer, Harald, 91522 Ansbach (DE)
(74) Vertreter: Diehl Patentabteilung

(56) Entgegenhaltungen:
- EP-A1- 1 876 427
- EP-A2- 0 579 493
- EP-A2- 0 831 303
- EP-A2- 1 775 560
- EP-A2- 2 172 657
- WO-A1-90/00929
- DE-A1-102004 060 065
- GB-A- 2 319 343

## Beschreibung

Die Erfindung trifft ein Ultraschallzähler, umfassend ein Gehäuse mit einem rohrförmigen Strömungsabschnitt, in dem ein eine Messstrecke definierender Messeinsatz eingesetzt ist, sowie zwei gehäuseseitige angeordnete Ultraschallwandler, denen am Messeinsatz angeordnete Reflektoren zugeordnet sind.

Solche Ultraschallzähler, oft auch Ultraschalldurchflussmesser genannt, dienen zur Ermittlung des Durchflusses eines strömenden, in der Regel fluiden Mediums, vornehmlich Wassers. Üblicherweise besteht ein solcher Ultraschallzähler aus einem Gehäuse, das zumeist rohrförmig ist und einen entsprechenden rohrförmigen Strömungsabschnitt aufweist, der sich durch das Gehäuse beginnend vom Einlass bis zum Auslass erstreckt. In diesen rohrförmigen Strömungsabschnitt wird lagefest ein Messeinsatz eingebracht, der eine Messstrecke definiert, innerhalb welcher die eigentliche Messung erfolgt. Dies geschieht mittels zweier Ultraschallwandler, die gehäuseseitig angeordnet sind, und denen zwei am Messeinsatz positionierte, unter einem Winkel von 45 ° zur Längsachse der Messstrecke stehende Reflektoren zugeordnet sind. Die beiden Ultraschallwandler sind mit ihren Messachsen senkrecht zur Längsachse der Messstrecke ausgerichtet. Sie werden beispielsweise abwechselnd als Sender und Empfänger betrieben, wie auch nur der eine als Sender und der andere als Empfänger betrieben werden kann. Der sendende Ultraschallwandler emittiert sein Signal in Richtung des ihm zugeordneten Reflektors, der das Ultraschallsignal parallel zur Längsachse in die Messstrecke reflektiert. Das vom Fluid beeinflusste Signal wird vom zweiten Ultraschallwandler wiederum aus der Messstrecke in Richtung des empfangenden Ultraschallwandlers reflektiert, wo es aufgenommen und anschließend über eine nachgeschaltete Auswerteelektronik zur Durchflussermittlung verarbeitet wird. Die Funktionsweise eines solchen Ultraschallzählers ist dem Grunde nach bekannt.

Das zu vermessende Fluid, also beispielsweise Wasser, strömt durch den Strömungsabschnitt respektive die Messstrecke. Hierbei sind zwei Strömungsarten zu unterscheiden, nämlich zum einen die laminare Strömung, zum anderen die turbulente Strömung. Mit zunehmenden Durchfluss respektive zunehmender Durchflussgeschwindigkeit findet ein Übergang von einer Strömungsart in die andere statt. Bei Ultraschallzählern wirkt sich dieser Strömungswechsel nachteilig aus, als es zu einem direkten Sprung in der Kennlinie des Ultraschallzählers kommt, d.h., dass das Messsignal beim Übergang von laminarer zur turbulenter Strömung oder umgekehrt einen relativ steilen Sprung in der Kennlinie zeigt, der aus dem harten Übergang zwischen den beiden Geschwindigkeitsverteilungen resultiert. Dieser Kennliniensprung ist mathematisch nicht exakt zu korrigieren. Hinzu kommt, dass dieser Kennliniensprung auch insoweit variabel ist, als er mit der Temperatur und der Variaton der Einströmbedingungen in der Regel um einige Prozent des kompletten Messbereichs wandert. Das heißt, dass bei bekannten Ultraschallzählern im Bereich des Strömungswechsels eine über die nachgeschaltete Signalverarbeitung nur schwerlich zu kompensierende Messungenauigkeit gegeben ist.

Von üblichen Durchflusszählern, die auf Basis eines Flügelrades arbeiten, ist der Einsatz eines Strömungsgleichrichters bekannt, der entweder als eigenständiges Bauteil vor einem Strömungssensor in die Rohrleitung eingebaut wird bzw. direkt in das Gehäuse eines Durchflussmessgeräts integriert wird. Hierbei sind grundsätzlich zwei Wirkprinzipien zu unterscheiden. Ein erster Gleichrichtertyp dient dazu, primär Drallströmung zu unterbinden und besteht daher zumeist aus dünnwandigen Blechen bzw. Rohrbündeln. Ein zweiter Gleichrichtertyp versucht durch eine drastische Verengung des Strömungskanals ein definiertes, physikalisch ideales Strömungsprofil aufzubauen. Beide Gleichrichtertypen bewirken in der Regel keine Änderung der kleinräumigen Flussrichtung innerhalb des durchströmten Bauteils, d.h., der Strömungsvektor der Teilströmungen zeigt immer in axiale Richtung parallel zur Rohrlängsachse.

Der Einsatz eines solchen Gleichrichters bei einem Ultraschallzähler der beschriebenen Art zeigt keine Verbesserung im Übergangsbereich zwischen laminarer und turbulenter Strömung, auch der Effekt der Verringerung des messtechnischen Einflusses gegenüber unterschiedlichen Strömungsstörquellen ist vernachlässigbar. Das heißt, dass mittels eines solchen Gleichrichters die beim Ultraschallzähler gegebenen Probleme hinsichtlich des Kennliniensprungs, die aus dem Übergang zwischen den beiden Geschwindigkeitsverteilungen beim Strömungswechsel resultieren, nicht beseitigt werden können.

Aus der EP 2 172 657 A2, der GB 2 319 343 A und der EP 0 831 303 A2 sind verschiedene Geometrien solcher Strömungsgleichrichter zur Verwendung in Ultraschallzählern gezeigt. Dabei finden parallel zur Strömungsrichtung angeordnete Stege, die gerade oder auch kreisförmig ausgeführt sein können, ebenso Anwendung wie maschenförmige Netze, sternförmig angeordnete Strömungsleitplatten oder aneinandergefügte Rohre.

Aus der EP 1 775 560 A2 ist ein Strömungsrichter bekannt, welcher schräg zur Strömungsrichtung orientierte, sternförmig angeordnete Stege aufweist, wobei jeweils zwei benachbarte Stege gegeneinander geneigt sind, um Turbulenzen in der Strömung zu vermindern oder ganz auszulöschen.

Eine Turbulatorkomponente zur Erzeugung einer Turbulenz im strömenden Medium im Einlaufbereich einer Durchflussmessstrecke ist in der EP 1 876 427 A1 beschrieben. Diese weist sternförmig angeordnete Stege auf, welche gegen die Strömungsrichtung verkippt angeordnet sind. Um eine Verwirbelung des einströmenden Mediums zu erreichen, sind die Stege jeweils in die gleiche Richtung verkippt.

Gekippt angeordnete Stege eines Strömungsturbulenzen erzeugenden Einsatzes für einen Coriolis-Durchflussmesser offenbart auch die EP 0 579 493.

Der Erfindung liegt nun das Problem zu Grunde, einen Ultraschallzähler anzugeben, der demgegenüber verbessert ist.

Zur Lösung dieses Problems ist erfindungsgemäß ein Ultraschallzähler vorgesehen, umfassend ein Gehäuse mit einem rohrförmigen Strömungsabschnitt, in den ein eine Messstrecke definierender Messeinsatz eingesetzt ist, sowie zwei gehäuseseitig angeordnete Ultraschallwandler, denen am Messeinsatz angeordnete Reflektoren zugeordnet sind, wobei in den Strömungsabschnitt ein dem Messeinsatz vorgeschalteter, die Strömung beeinflussender Einsatz gesetzt ist, bestehend aus einem am Innenumfang des Strömungsabschnitt anliegenden Außenring und mehreren den Ringquerschnitt in mehrere seitlich geschlossene Durchbrechungen unterteilenden Stegen, wobei zumindest ein Teil der Stege bei gleichbleibender Stegstärke nicht parallel zur Längsachse des Strömungsabschnitts steht.

Bei dem erfindungsgemäßen Ultraschallzähler wird ein in besonderer Weise ausgestalteter Einsatz verwendet, der gerade nicht die Aufgabe hat, die Strömung dem physikalischen Ideal anzunähern, sondern im Gegenteil möglichst viele Turbulenzen und Wirbel auch bei niedrigen Strömungsgeschwindigkeiten und damit vor allem im Übergangsbereich zwischen turbulenter und laminarer Strömung einbringen soll. Er dient also der gezielten Verwirbelung des Fluids, wozu eine besondere Geometrie respektive Ausgestaltung der Durchbrechungen respektive der Stege vorgesehen ist.

Dieser Einsatz umfasst einen Außenring, der am Innenumfang des Strömungsabschnitts anliegt, so dass der Einsatz letztlich senkrecht zur Einströmachse positioniert ist. Der über den Außenring definierte Ringquerschnitt ist über mehrere Stege in eine Vielzahl seitlich geschlossener Durchbrechungen unterteilt, durch die das Fluid strömt, d.h., dass auch hier eine Vielzahl einzelner Teilströmungen ausgebildet werden. Die Durchbrechungen respektive deren Wandflächen sind jedoch nicht so ausgelegt, dass es zu einer Gleichrichtung kommt, wie dies bei bekannten Gleichrichtern ist, um sich wie dort bekannt dem physikalischen Ideal anzunähern. Vielmehr ist zumindest ein Teil der die Durchbrechungen begrenzenden Stegwandflächen gerade nicht parallel zur Längsachse des Strömungsabschnitts angeordnet, d.h., sie stehen unter einem Winkel ungleich 180° bezogen auf die Längsachse des Strömungsabschnitts, so dass das durchströmende Teilstromvolumen zwangsläufig eine Ablenkung relativ zur Strömungslängsachse erfährt. Dies ist dadurch realisiert, dass die Stege zum Teil bei gleichbleibender Stegstärke und damit ihre das Fluid führenden Flächen verkippt, also nicht parallel zur Längsachse des Strömungsabschnitts stehen. Nachdem eine oder mehrere Stegwandflächen mehrerer solcher Durchbrechungen in entsprechender Weise unter einem Winkel zur Strömungslängsachse angestellt sind, kommt es folglich über den Ringquerschnitt und damit dem gesamten Strömungsquerschnitt zur Ausbildung einer Mehrzahl einzelner abgelenkter Teilvolumenströme, so dass sich insgesamt hinter dem Einsatz eine Verwirbelung der Strömung ergibt, mithin also viele Turbulenzen innerhalb des Strömungsprofils gegeben sind. Es wird also quasi eine definierte Unordnung erzeugt.

Als besonders zweckmäßig hinsichtlich der Durchbrechungsgeometrie hat sich herausgestellt, die Durchbrechungen rechteckig, vorzugsweise quadratisch auszugestalten. Dabei kann sich grundsätzlich die Querschnittsfläche, gesehen in Längsrichtung der Durchbrechung, nicht ändern, alternativ dazu besteht die Möglichkeit, dass sie sich ändert, mithin also aufgrund der schrägstehenden Stege die Querschnittsfläche etwas zu- oder abnimmt, wobei jedoch die Flächenkostanz bevorzugt ist.

Die konkrete Erfindungsausgestaltung sieht hinsichtlich der Ausgestaltung der rechteckigen respektive quadratischen Durchbrechungen vor, dass der Einsatz mehrere parallel zueinander und parallel zur Längsachse des Strömungsabschnitts verlaufende erste Stege aufweist, zwischen denen sich zur Bildung der geschlossenen Durchbrechungen senkrecht zu den ersten Stegen stehende zweite Stege erstrecken, von denen zumindest ein Teil die nicht parallel zur Längsachse des Strömungsabschnitts stehenden Stegflächen aufweist. Es ergibt sich also eine Gitterstruktur, gebildet über die ersten und zweiten Stege, die senkrecht zueinander verlaufen, wobei bevorzugt die ersten Stege parallel zur Strömungsrichtung verlaufen. Da die zweiten Stege ihre Breite oder Stärke gesehene Strömungslängsrichtung nicht ändern, weist ein zweiter Steg die Verwirbelungsflächen für zwei benachbarte Durchbrechungen auf.

Es hat sich nun herausgestellt, dass auf Basis dieses bewusst verwirbelten Strömungsprofils kein harter Übergang mehr zwischen den beiden Geschwindigkeitsverteilungen (Parabel bzw. Rechteck) gegeben ist, der wie einleitend beschrieben normaler Weise direkt als Sprung in der Kennlinie sichtbar wird und der mathematisch nicht exakt zu korrigieren ist. Vielmehr ergibt sich ein eher stetiger Übergang, der im Rahmen der Nachverarbeitung wesentlich besser korrigiert werden kann. Das heißt, dass ein Strömungswechsel sich nicht mehr nachteilig auf die Messgenauigkeit auswirkt, da er korrigierbar ist. Auch eine etwaige Temperaturänderung oder sich ändernde Einströmbedingungen wirken sich infolge der gezielten Verwirbelung nicht mehr nachteilig aus.

Erfindungsgemäß bleibt die Stegstärke oder Stegbreite, gesehen in Strömungslängsrichtung, gleich, durch die generelle Schrägstellung ergeben sich demzufolge in zwei benachbarten Durchbrechungen entsprechende Schrägwandflächen, die zur Strömungslängsachse verkippt sind.

Dabei ist es ausreichend, wenn wenigstens ein Steg nicht parallel zur Längsachse steht. Bevorzugt sind jedoch bei rechteckiger Durchbrechungsgeometrie zwei schräg stehende Stege und zwei weitere parallel stehende Stege vorgesehen, damit in Durchbrechungslängsrichtung Querschnittsflächenkonstanz gegeben ist.

Wenngleich nur ein Teil der zweiten Stege derart nicht parallel respektive verkippt angeordnet sein kann, ist gemäß einer zweckmäßigen Ausbildung der Erfindung vorgesehen, dass alle zweiten Stege entsprechend verkippt positioniert sind, so dass folglich über den gesamten Strömungsquerschnitt in jeder Durchbrechung wenigstens zwei entsprechende verkippt angeordnete Flächen ausgebildet sind, es also mithin quasi in jedem Teilvolumenstrom zu einer Verwirbelung kommt.

Hinsichtlich der konkreten Ausrichtung dieser zweiten Stege, also der Verkippungsrichtung, sind unterschiedliche Ausgestaltungen denkbar. Gemäß einer ersten Erfindungsalternative kann zumindest ein Teil, vorzugsweise können alle im Bereich zwischen zwei ersten Stegen vorhandenen, nicht parallel zur Längsachse stehenden zweiten Stege gleich bezüglich der Längsachse verlaufen. Betrachtet man die zwischen zwei ersten Stegen angeordneten zweiten Stege, so sind also alle Stege in die gleiche Richtung verkippt respektive sind alle Stegwandflächen in die gleiche Richtung verkippt. Das heißt, dass die Teilvolumenstromablenkung in jeder der hierüber begrenzten Durchbrechungen gleich ist, wie auch die jeweilige Querschnittsfläche jeder Durchbrechung in Strömungsrichtung gesehen konstant bleibt. Dies verhindert, dass es zu Druckunterschieden vor und hinter der Durchbrechung, bezogen auf das Teilströmungsvolumen, kommt, wie dies der Fall ist, wenn sich z.B. die Querschnittsfläche verkleinert und die Durchbrechung düsenartig wirkt. Der Einsatz wirkt also kaum druckverändernd. Dies ist ein zentraler Vorteil der Querschnittsflächenkonstanz, der bei allen entsprechenden Erfindungsausführungen gegeben ist.

Alternativ dazu kann zumindest ein Teil der im Bereich zwischen zwei ersten Stegen vorhandenen, nicht parallel zur Längsachse stehenden zweiten Stege in unterschiedlichen, vorzugsweise einander entgegen gesetzten Richtungen bezüglich der Längsachse verkippt sein. Bei dieser Ausgestaltung sind folglich die Verkippungsrichtungen der zweiten Stege innerhalb einer solchen Stegreihe zwischen zwei parallelen ersten Stegen unterschiedlich, ein Teil ist in die eine Richtung verkippt, ein anderer Teil in die andere Richtung. Hieraus resultieren folglich unterschiedliche Ablenkrichtungen der einzelnen Teilvolumenströme innerhalb einer solchen Durchbrechungsreihe. Wiederum bleibt die Querschnittsfläche der Durchbrechungen, die über zwei in die gleiche Richtung verkippte zweite Stege begrenzt sind, in Strömungsrichtung gesehen gleich, verbunden mit dem Vorteil, dass sich keine Druckunterschiede vor und hinter der Durchbrechung ergeben.

Dabei können ganz grundsätzlich die Stege zweier benachbarter Bereiche in unterschiedlichen Richtungen bezüglich der Längsachse verkippt sein. Betrachtet man zwei parallele Durchbrechungsreihen, die über insgesamt drei parallele erste Stege definiert sind, so können die jeweiligen Verkippungsrichtungen zwischen diesen beiden Durchbrechungsreihen insoweit unterschiedlich sein, als letztlich die Ablenkrichtungen zweier weitgehend benachbarter Durchbrechungen jeweils unterschiedlich sind. Das heißt, dass das Fluid in der einen Durchbrechung in die eine Richtung abgelenkt wird, während es in der benachbarten Durchbrechung in die andere Richtung abgelenkt wird. Das heißt, dass eine Verkippungsvariation nicht nur innerhalb einer Durchbrechungsreihe möglich ist, sondern auch übergreifend von einer Durchbrechungsreihe zur anderen.

Unabhängig davon, wie nun der Einsatz konkret ausgestaltet ist, ist zur Fixierung desselben im Strömungsabschnitt eine Radialnut vorgesehen, in der der Einsatz gehaltert ist. Entweder ist die Radialnut axial gesehen so lange ausgeführt, dass der Einsatz mit seinem Ring komplett in die Nut verrastet ist, denkbar ist aber auch, am Außenring des Einsatzes eine außen vorspringend umlaufenden Ringvorsprung auszubilden, der in die entsprechend bemessene Radialnut im Strömungsabschnitt eingeschnappt ist.

Zusätzlich oder alternativ können am Einsatz ein oder mehrere Rastelemente vorgesehen sein, die an im Strömungsabschnitt, gegebenenfalls der Radialnut, vorgesehenen Rastaufnahmen verrasten.

Weiterhin kann für eine positionsgenaue Montage und sie Sicherstellung der Beibehaltung der Montageposition eine Verdrehsicherung vorgesehen sein, insbesondere ein radialer Vorsprung, der in eine radiale Aufnahme im Strömungsabschnitt, insbesondere der Radialnut, eingreift.

Für eine möglichst einfache Fertigung des Einsatzes ist dieser zweckmäßigerweise als Kunststoffspritzteil ausgeführt.

Weitere Vorteile, Merkmale und Einzelheiten der Erfindung ergeben sich aus dem im Folgenden beschriebenen Ausführungsbeispiel sowie anhand der Zeichnungen. Dabei zeigen:
Fig. 1 eine Schnittansicht durch einen erfindungsgemäßen Ultraschallzähler,
Fig. 2 eine Aufsicht auf einen erfindungsgemäßen Einsatz einer ersten Ausführungsform
Fig. 3 eine Schnittansicht durch Einsatz aus Fig. 2 entlang der Linie III -III,
Fig. 4 eine Schnittansicht durch den Einsatz gemäß Fig. 2 entlang der Linie IV-IV,
Fig. 5 eine weitere Ausführungsform eines erfindungsgemäßen Einsatzes ähnlich dem aus Fig. 2,
Fig. 6 eine Perspektivansicht des Einsatzes aus Fig. 5,
Fig. 7 eine Aufsicht auf einen Einsatz einer weiteren Ausführungsform,
Fig. 8 eine Schnittansicht durch den Einsatz aus Fig. 7 in Richtung der Linie VIII-VIII,
Fig. 9 eine Schnittansicht durch den Einsatz aus Fig. 7 entlang der Linie IX-IX,
Fig. 10 eine Aufsicht auf einen Einsatz einer nicht erfindungsgemäßen Ausführungsform,
Fig. 11 eine Schnittansicht durch den Einsatz aus Fig.10 in Richtung der Linie XI-XI,
Fig. 12 und 13 zwei Messdiagramme mit Durchflussmesswerten, ermittelt mit einem Wärmezähler vom Typ qp6, ohne Einsatz (Fig. 12) und mit Einsatz (Fig. 13), sowie Fig. 14 und 15 die über entsprechende Korrekturkennlinien korrigierten Messwertdiagramme gemäß Fig. 12 und 13.

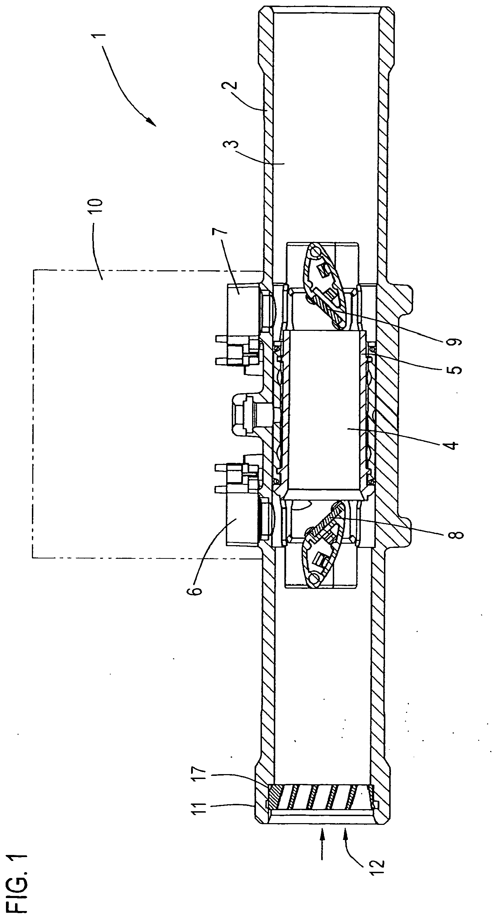

Fig. 1 zeigt einen erfindungsgemäßen Ultraschallzähler 1, umfassend ein rohrförmiges Gehäuse 2 mit einem Strömungsabschnitt 3, in den ein eine Messstrecke 4 definierender Messeinsatz 5 eingesetzt ist. An der Außenseite des rohrförmigen Gehäuses 2 sind zwei Ultraschallwandler 6, 7 vorgesehen, über die in bekannter Weise Ultraschallsignale ein- und ausgekoppelt werden. Am Messeinsatz 5 sind zwei Reflektoren 8, 9 vorgesehen, die die eingekoppelten Ultraschallsignale achsparallel zur Messstreckenlängsachse reflektieren respektive die auszukoppelnden Ultraschallsignale wieder in Richtung des benachbarten Ultraschallwandlers. Der Messeinsatz 5 kann beispielsweise ein Kunststoffbauteil sein. Der grundsätzliche Aufbau eines solchen Ultraschallzählers 1, der natürlich noch über eine geeignete, hier nur gestrichelt gezeigte Anzeige- und Verarbeitungselektronik 10 verfügt, ist bekannt.

Im Bereich des rohreingangsseitigen Anschlussstutzens 11 ist ein Einsatz 12 angeordnet, der der Beeinflussung der Strömung, die in Richtung des Pfeils in das Gehäuse 2 eintritt, dient. Der Einsatz ist also der Messstrecke 4 vorgeschaltet und beeinflusst die Strömung in einer Weise, dass eine optimale Messwerterfassung möglich ist.

Der Einsatz ist derart konfiguriert, dass - anders als bisher im Stand der Technik - mit ihm eine gezielte Verwirbelung der eintretenden Strömung möglich ist, mithin also gezielt Turbulenzen eingebracht werden. Zu diesem Zweck wird über den Einsatz 12 der gesamte Strömungsquerschnitt in eine Vielzahl einzelner kleiner Strömungsquerschnitte separiert. Dies geschieht mittels entsprechend schräg stehender Stege, worauf nachfolgend im Bezug auf die einzelnen Ausführungsbeispiele noch eingegangen wird. Es werden am Einsatz 12 eine Vielzahl einzelner Durchbrechungen realisiert, die, axial gesehen, derart strukturiert sind, dass eine Umlenkung der einzelnen hierüber separierten Teilströmungen erfolgt, mithin also die einzelnen Teilströmungen unter einem Winkel relativ zur Längsachse des Gehäuses abgelenkt werden. Die Ablenkung kann gleichförmig in dieselbe Richtung erfolgen, d.h., dass alle Teilströmungen in die gleiche Richtung abgelenkt werden: Sie kann auch so sein, dass die Ablenkung in unterschiedliche Richtungen erfolgt, mithin also die einzelnen Teilströmungen quasi aufeinander prallen respektive Scherkräfte wirken. Hierüber werden beachtlich große Wirbel respektive Turbulenzen erzeugt, so dass sich mithin hinter dem Einsatz ein relativ definiert verwirbeltes Strömungsmuster ausbildet.

Diese Verwirbelung wird sowohl bei kleinen als auch bei großen Durchflussmengen erzielt, mithin aber insbesondere in dem Durchflussbereich, in dem es zu einem Umschlag von laminarer zu turbulenter Strömung kommt. Hierdurch entsteht kein harter Übergang zwischen den beiden unterschiedlichen Geschwindigkeitsverteilungen, was sich vorteilhaft auf die erhaltenen Messwerte auswirkt, worauf nachfolgend noch eingegangen wird.

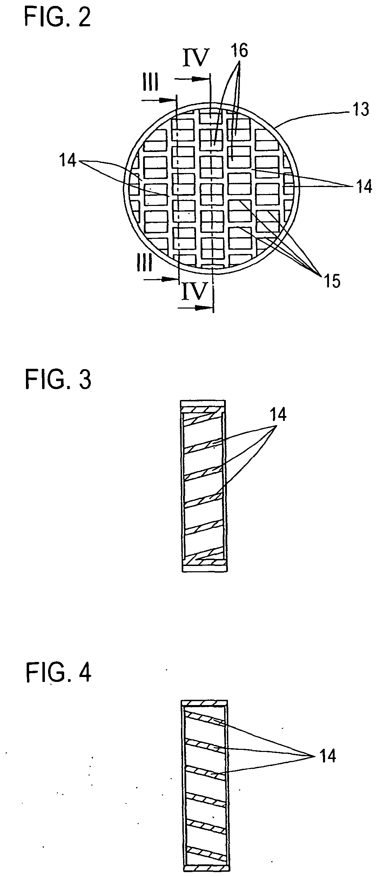

Die Fig. 2 - 4 zeigen ein erstes Ausführungsbeispiel eines erfindungsgemäßen Einsatzes, der bevorzugt als Kunststoffspritzteil hergestellt ist. Dieser besteht aus einem Außenring 13, der über eine Vielzahl erster Stege 14, die, bezogen auf die Darstellung in Fig. 2, in vertikaler Richtung verlaufen, sowie zweiter Stege 15, die gemäß Fig. 2 in horizontaler Richtung verlaufen, in eine Vielzahl einzelner Durchbrechungen 16 separiert ist. Jede Durchbrechung definiert einen einzelnen, kleinen Strömungsquerschnitt, durch jede Durchbrechung tritt also ein einzelnes Teilströmungsvolumen der Gesamtströmung.

Im gezeigten Beispiel verlaufen die ersten und zweiten Stege 14,15 rechtwinklig zueinander, so dass sich eine Gitterstruktur ausbildet. Die ersten, vertikalen Stege 14 definieren quasi nebeneinander liegende Spalten, die über die zweiten Stege 15 in einzelne, übereinander liegende Durchbrechungen 16 unterteilt sind.

Erfindungsgemäß verlaufen nun die zweiten Stege 15 insgesamt, also über ihre gesamte axiale Länge, schräg zur Längsachse des Strömungsabschnittes 3, also des Gehäuses 2, wie aus den Fig. 3 und 4 zu entnehmen ist. Das heißt, dass jedes Teilvolumen, also jede Durchbrechung 16, an zwei Seiten über Schrägflächen, die bei diesem Ausführungsbeispiel in die gleiche Richtung verlaufen, abgegrenzt ist. Es ergeben sich also Durchbrechungen mit ausgezeichneten Strömungsrichtungen für das jeweilige Teilvolumen, wobei die jeweilige Strömungsrichtung eben nicht parallel zur Gehäuselängsachse verläuft, sondern unter einem Winkel dazu. Dabei definiert jeder einzelne zweite Steg 15 quasi zwei Ablenkflächen, soweit der Steg im mittleren Bereich einer "Spalte" angeordnet ist, wie die einzelnen Schnittansichten gemäß der Fig. 3 und 4 zeigen. In jedem Fall bleibt jedoch der Querschnitt der jeweiligen Durchbrechung in axialer Richtung gesehen gleich, d.h., es kommt zu keinen Einschnürungen oder Erweiterungen des Querschnitts respektive der Querschnittsfläche, die in irgend einer Weise düsenförmig wären, was sich nachteilig auf die Strömung auswirkt. Dies gilt insbesondere im Falle von entsprechenden Verengungen, da hierüber der Strömungswiderstand erhöht wird. Wie die Schnittansichten gemäß der Fig. 3 und 4 zeigen, bleiben, unabhängig davon, wie nun konkret die jeweiligen Stege 15 in der jeweiligen Spalte ausgerichtet sind, die Querschnitte jeweils gleich. Die vertikalen Stege 14 verlaufen ohnehin mit ihren Durchbrechungsbegrenzungsflächen parallel zueinander und achsparallel, so dass sie den Querschnitt ebenfalls nicht variieren.

Wie die Fig. 3 und 4 zeigen, sind die Stege 14 zweier benachbarter Spalten in unterschiedliche Richtungen relativ zur Längsachse verkippt, so dass also zwei benachbarte Spalten unterschiedliche Ablenkrichtungen definieren, die eine nach unten, die andere nach oben. Dies bewirkt, dass es zu einer richtungsmäßig aufgetrennten Ablenkung der einzelnen Teilströme kommt.

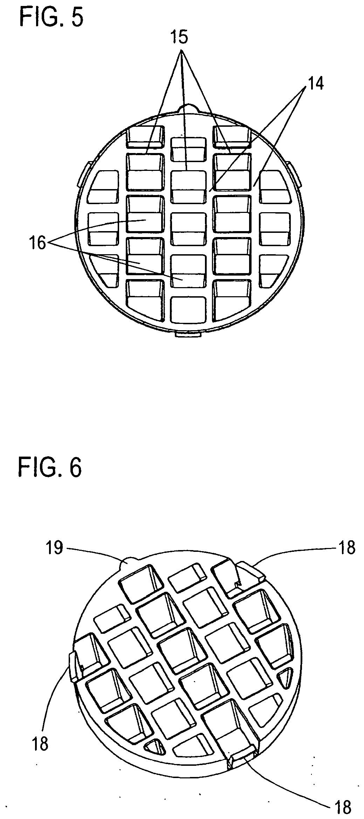

Die Fig. 5 und 6 zeigen eine weitere Ausführung eines Einsatzes, der vom Aufbau her dem Einsatz gemäß der Fig. 2-4 entspricht, jedoch separate, eigene Befestigungsmittel aufweist, wobei für gleiche Bauteile gleiche Bezugszeichen verwendet werden. Während der Einsatz gemäß der Fig. 2-4 in einer entsprechenden Nut 17 im Gehäuse 2 aufgenommen ist und dort über beispielsweise einen zusätzlichen Befestigungsring fixiert wird, oder über einen nicht näher gezeigten umlaufenden Ringwulst in eine Ringnut am Gehäuse einschnappt, sind bei dem Einsatz gemäß der Fig. 5 und 6 randseitige Rastelemente 18 vorgesehen, die an entsprechenden Rastabschnitten im Bereich des Gehäuses 2 verrasten. Die Rastelemente 18 sind, da es sich um ein Kunststoffbauteil handelt, leicht federnd, können also etwas ein- und ausgebogen werden, so dass eine einfache Verrastung beim Einschieben des Einsatzes erfolgen kann. Zur Sicherstellung, dass der Einsatz auch in der richtigen umfangsmäßigen Ausrichtung eingesetzt wird und in dieser verbleibt, ist ferner eine Verdrehsicherung 19 vorgesehen, die in eine entsprechende Aufnahme oder Ausnehmung am Gehäuse 2 eingreift und den Einsatz gegen Verdrehen sichert.

Ansonsten entspricht der grundsätzliche Aufbau hinsichtlich des Verlaufs der ersten und zweiten Stege 14, 15 und damit der entsprechenden Geometrieteildurchbrechung in 16 dem wie bezüglich der Fig. 2-4 beschrieben.

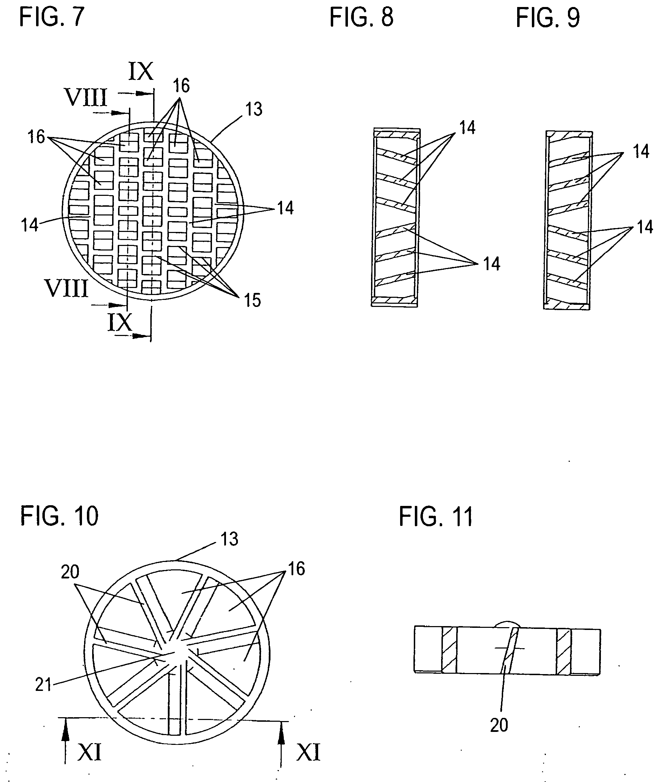

Ein weiteres Ausführungsbeispiel eines vergleichbaren Einsatzes zeigen die Fig. 7 - 9, wobei wiederum für gleiche Bauteile gleiche Bezugszeichen verwendet werden.

Der in Fig. 7 gezeigte Einsatz 12 weist ebenfalls einen Außenring 13 auf. Die Querschnittsfläche des Außenrings 13 ist auch hier über erste Stege 14, die (in der Fig.) vertikal verlaufen, sowie zweite Stege 15, die horizontal verlaufen, in eine Vielzahl einzelner Durchbrechungen 16 aufgeteilt. Hier jedoch sind innerhalb einer Spalte, definiert über zwei benachbarte vertikale Stege 14, die zweiten Stege unterschiedlich relativ zur Längsachse verkippt, wie die Fig. 8 und 9 zeigen. So sind, siehe Fig. 8, die drei oberen zweiten Stege 14 mit ihrem linken Ende nach oben verlaufend angeordnet, während die drei unteren zweiten Stege 14 mit ihrem linken Ende nach unten verkippt sind. Genau andersrum ist die Stegverkippung in der benachbarten Spalte, wie Fig. 9 anschaulich zeigt.

Auch hier sind die einzelnen Stege insgesamt verkippt, d.h., jeder zweite Steg 14 variiert seine Stärke oder Dicke nicht, was für alle erfindungsgemäßem Ausführungsbeispiele gilt. Aus diesem Grund sind auch hier die Querschnittsflächen der einzelnen hierüber abgegrenzten Durchbrechungen 16, abgesehen von der jeweils mittigen Durchbrechung, wo zwei Stege aufeinander zulaufen, wiederum gleich, verändern sich also nicht, so dass es nicht zu irgendwelchen querschnittsmäßigen Einschnürungen und dergleichen kommt, abgesehen von der mittigen Durchbrechung. Hiermit wird also innerhalb einer Spalte eine richtungsmäßige unterschiedliche Ablenkung erzeugt, wobei die Ablenkrichtungen benachbarter Spalten wiederum unterschiedlich zueinander sind. Auch hiermit kann folglich eine beachtliche Verwirbelung erreicht werden.

Bezüglich der Ausführungsbeispiele gemäß Fig. 2-6, sowie 7-9 gilt, dass die Querschnittsfläche aller kompletten Durchbrechungen, die aufgrund ihrer Lage nicht zwangsläufig verkleinert ist (die zum Rand liegenden Durchbrechungen sind, da es sich um ein rundes Bauteil handelt, selbstverständlich etwas kleiner als die daran anschließenden, zur Mitte liegenden Durchbrechungen) allesamt im Querschnitt gleich sind.

Die Fig. 10 und 11 zeigen eine Ausführungsform eines nicht erfindungsgemäßen Einsatzes 12, ebenfalls bestehend aus einem Außenring 13, dessen Querschnitt jedoch über mehrere, im gezeigten Beispiel sechs Stege 20, die sich sternförmig vom mittigen Zentrum 21 nach außen zum Außenring 13 erstrecken, unterteilt wird. Es entstehen also sechs tortenförmige Durchbrechungen 16, die allesamt gleich groß sind. Jeder Steg 20 steht insgesamt wiederum unter einem Winkel zu Längsrichtung des Gehäuses 2, jeder Steg 20 begrenzt wiederum zwei benachbarte Durchbrechungen. Da alle Stege 20, die auch hier ihre Stärke oder Dicke nicht ändern, in dieselbe Richtung verkippt sind, ändert sich auch hier gesehen in Durchtrittsrichtung die Querschnittsfläche jeder Durchbrechung 16 nicht, es kommt folglich zu keinen Einschnürungen. In Folge der schräg stehenden Stege 20 respektive ihrer durchbrechungsbegrenzenden Flächen kommt es auch folglich hier zu entsprechenden Ablenkungen der einzelnen durchströmenden Teilvolumina, die hier quasi "auf eine Kreisbahn" abgelenkt werden. Es kommt also auch hier zu einer gezielten Verwirbelung mit ihren positiven Effekten.

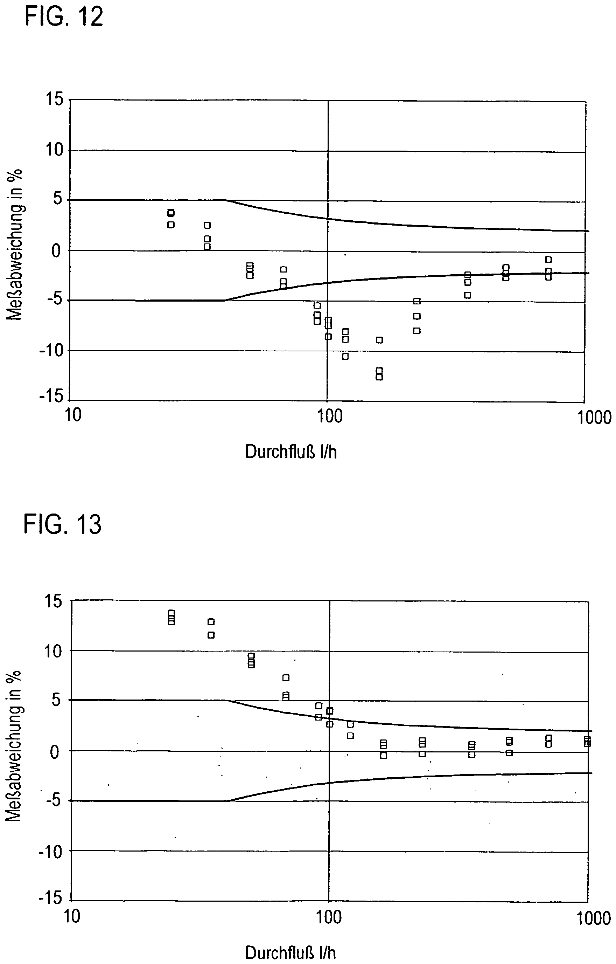

Die Fig. 12 und 13 zeigen zwei Messwertdiagramme, die längs der Abszisse den Durchfluss in l/h und längs der Ordinate die Messabweichung in Prozent zeigen. Die beiden Diagramme wurden mit demselben Wärmezähler vom Typ qp6 (qp6 = Größenklasse mit 6.000 l/h Durchfluss) gemessen. Das vermessene Medium war Wasser mit einer Temperatur von 20 +/- 5° Celsius. Die Rohrquerschnitte der Anschlussverrohrung war DN25/32. Fig. 12 zeigt die Messwerte ohne Einsatz, während Fig. 13 die Messwerte mit Einsatz zeigt. Verwendet wurde ein Einsatz, wie er in Fig. 2 gezeigt ist, also ein Einsatz bei dem die Ablenkrichtung der Durchbrechungen einer Spalte jeweils gleich ist, jedoch die Ablenkrichtungen zweier benachbarter Spalten unterschiedlich sind.

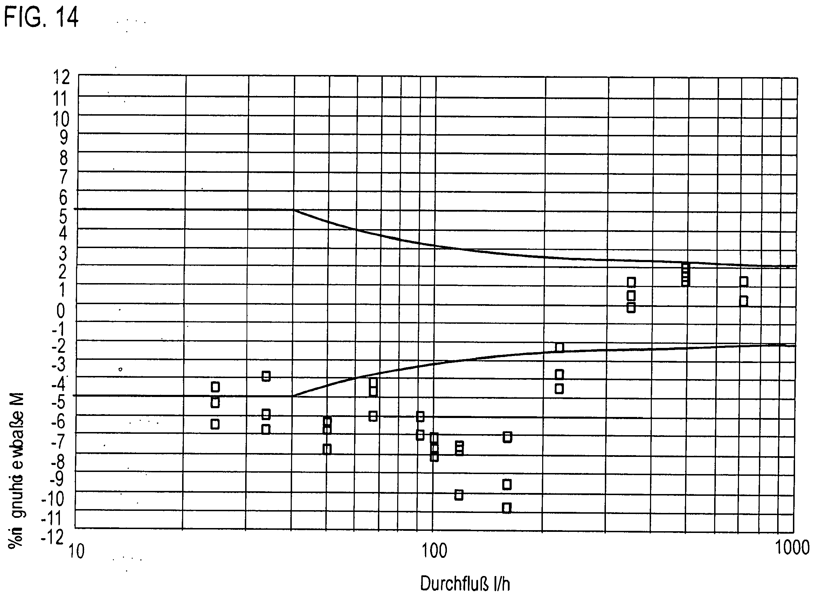

Wie Fig. 12 zeigt, ergibt sich ein Messwertverlauf respektive einer interpolierte Kurve, die zunächst fällt und sodann ein Minimum durchläuft, um anschließend zu höheren Durchflüssen wieder anzusteigen. Das Messwert - oder Kurvenminimum liegt im Bereich von ca. 100 - 200 l/h, also dem Bereich, in dem die laminare Strömung in turbulente Strömung umschlägt. Infolge dieses nicht stetigen Verlaufs ist eine Kennlinienkorrektur schwierig, wie die zugehörige Fig. 14 zeigt. Fig. 14 zeigt längs der Abszisse wiederum den Durchfluss in l/h und längs der Ordinate die Messwertabweichung in Prozent an. Es wurde eine rechnerische Kennlinienkorrektur vorgenommen, wobei ersichtlich ist, dass insbesondere die Messwerte, die im Bereich zwischen 100 - 200 l/h liegen, kaum vernünftig zu korrigieren sind, es mithin also trotz Korrektur noch zu beachtlichen Messabweichungen kommt. Dies beruht nicht zuletzt auch auf der Temperaturabhängigkeit des Umschlagpunktes.

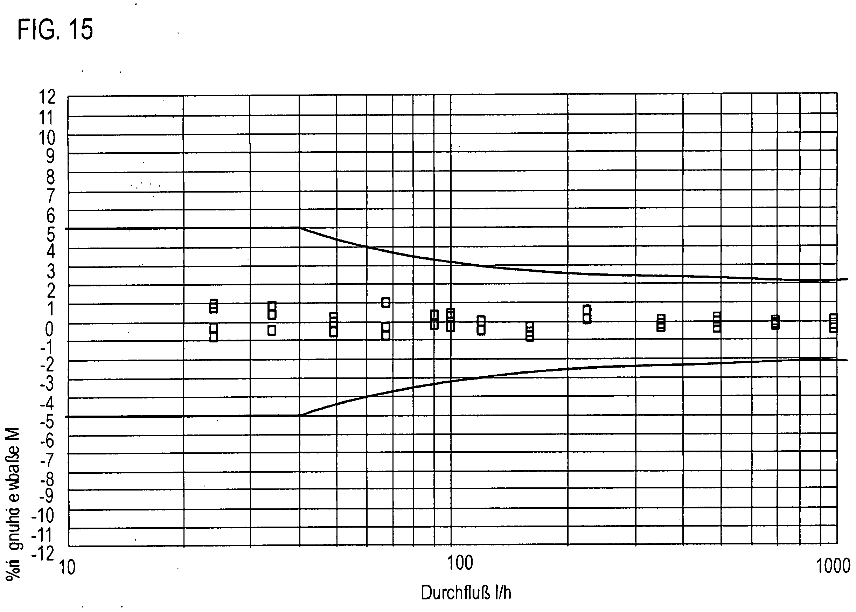

Ganz anders die Verhältnisse bei Verwendung des Einsatzes. Fig. 13 zeigt die erhaltenen Messwerte, wobei sich ersichtlich ein stetiger Verlauf zeigt, d.h., dass die Messwerte bei geringeren Durchflüssen eine beachtliche Messwertabweichung zeigen, die jedoch mit Zunahme des Durchflusses immer kleiner wird, bis sich die Messabweichung ab ca. einem Durchfluss von 150 l/h auf ein konstantes Niveau einpendelt. Es liegen hier also vom Kurvenverlauf her stetige Verhältnisse vor, d.h., dass sich eine vernünftige mathematische Kennlinienkorrektur erreichen lässt, wie die zugehörige Fig. 15 zeigt. Fig. 15 zeigt den Verlauf der Messabweichung über den Durchfluss nach erfolgter Kennlinienkorrektur. Ersichtlich liegen alle Messpunkte um die 0% - Messabweichung, ganz anders als in Fig. 14 nach der Korrektur der Messwerte ohne Messeinsatz.

Die Fig. 12 und 13 respektive 14 und 15 zeigen sehr anschaulich die besonderen Vorteile der Integration des erfindungsgemäßen "Verwirbelungseinsatzes", der also gezielte und möglichst starke Turbulenzen im Bereich des Strömungseingangs kurz vor der Messstrecke erzeugt. Das heißt, dass bei nahezu jedem Durchfluss eine beachtliche Verwirbelung gegeben ist, sich mithin also das Strömungsprofil bei niedrigen Durchflüssen kaum von dem Strömungsprofil bei höheren Durchflüssen unterscheidet respektive die gegebenen Unterschiede derart sind, das es zu einer mathematisch beschreibbaren Veränderung der Messwertabweichung mit zunehmenden Durchfluss kommt und daraus resultierend eine mathematisch hinreichend exakt durchführbare Kennlinienkorrektur möglich ist.

## Patentansprüche

1. Ultraschallzähler, umfassend ein Gehäuse (2) mit einem rohrförmigen Strömungsabschnitt (3), in den ein eine Messstrecke (4) definierender Messeinsatz (5) eingesetzt ist, sowie zwei gehäuseseitig angeordnete Ultraschallwandler (6,7), denen am Messeinsatz (5) angeordnete Reflektoren (8,9) zugeordnet sind,
wobei in den Strömungsabschnitt (3) ein dem Messeinsatz (5) vorgeschalteter, die Strömung beeinflussender Einsatz (12) gesetzt ist, bestehend aus einem am Innenumfang des Strömungsabschnitts (3) anliegenden Außenring (13) und mehreren den Ringquerschnitt in mehrere seitlich geschlossene Durchbrechungen (16) unterteilenden Stegen (14,15),
wobei zumindest ein Teil der Stege (15) bei gleichbleibender Stegstärke nicht parallel zur Längsachse des Strömungsabschnitts (3) steht,
wobei die Durchbrechungen (16) im Querschnitt rechteckig sind und
wobei der Einsatz (12) mehrere parallel zueinander und parallel zur Längsachse des Strömungsabschnitts (3) verlaufende erste Stege (14) aufweist, zwischen denen sich zur Bildung der geschlossenen Durchbrechungen (16) senkrecht zu den ersten Stegen (14) stehende zweite Stege (15) erstrecken, von denen zumindest ein Teil nicht parallel zur Längsachse des Strömungsabschnitts (3) verläuft.

2. Ultraschallzähler nach Anspruch 1, **dadurch gekennzeichnet, dass** jeweils wenigstens ein Steg (15) einer jeden Durchbrechung (16) nicht parallel zur Längsachse des Strömungsabschnitts (3) steht.

3. Ultraschallzähler nach Anspruch 1 oder 2, **dadurch gekennzeichnet, dass** die Durchbrechungen (16) im Querschnitt quadratisch sind.

4. Ultraschallzähler nach Anspruch 1, **dadurch gekennzeichnet, dass** alle zweiten Stege (15) nicht parallel zur Längsachse des Strömungsabschnitts (3) verlaufen.

5. Ultraschallzähler nach Anspruch 1 oder 4, **dadurch gekennzeichnet, dass** zumindest ein Teil, vorzugsweise alle im Bereich zwischen zwei ersten Stegen (14) vorhandenen, nicht parallel zur Längsachse stehenden zweiten Stegen (15) gleich bezüglich der Längsachse verlaufen.

6. Ultraschallzähler nach Anspruch 1 oder 4, **dadurch gekennzeichnet, dass** zumindest ein Teil der im Bereich zwischen zwei ersten Stegen (14) vorhandenen, nicht parallel zur Längsachse stehenden zweiten Stege (15) in unterschiedlichen, vorzugsweise einander entgegengesetzten Richtungen bezüglich der Längsachse verkippt sind.

7. Ultraschallzähler nach Anspruch 6, **dadurch gekennzeichnet, dass** innerhalb eines Bereichs eine erste Gruppe von zweiten Stegen (15), die benachbart zueinander angeordnet sind, in einer ersten Richtung verkippt sind, während eine zweite Gruppe von zweite Stegen (15), die benachbart zueinander angeordnet sind, in einer entgegengesetzten Richtung verkippt sind.

8. Ultraschallzähler nach einem der Ansprüche 5 bis 7, **dadurch gekennzeichnet, dass** die zweiten Stege (15) zweier benachbarter Bereiche in unterschiedlichen Richtungen bezüglich der Längsachse verkippt sind.

9. Ultraschallzähler nach einem der vorangehenden Ansprüche, **dadurch gekennzeichnet, dass** im Strömungsabschnitt (3) eine Radialnut (17) vorgesehen ist, in der der Einsatz (12) gehaltert ist.

10. Ultraschallzähler nach einem der vorangehenden Ansprüche, **dadurch gekennzeichnet, dass** am Einsatz ein oder mehrere Rastelemente (18) vorgesehen sind, die an im Strömungsabschnitt (3), gegebenenfalls der Radialnut, vorgesehenen Rastaufnahmen verrasten.

11. Ultraschallzähler nach einem der vorangehenden Ansprüche, **dadurch gekennzeichnet, dass** am Einsatz (12) eine Verdrehsicherung (19) vorgesehen ist, insbesondere ein radialer Vorsprung, der in eine radiale Aufnahme im Strömungsabschnitt (3), insbesondere der Radialnut, eingreift.

12. Ultraschallzähler nach einem der vorangehenden Ansprüche, **dadurch gekennzeichnet, dass** der Einsatz (12) ein Kunststoffspritzteil ist.

## Claims

1. Ultrasonic meter comprising a housing (2) with a tubular flow section (3) in which a measurement insert (5) defining a measurement path (4) is inserted, and two ultrasonic transducers (6, 7) which are arranged on the housing side and are assigned reflectors (8, 9) are arranged on the measurement insert (5),
wherein placed in the flow section (3) is an insert (12) which is arranged upstream of the measurement insert (5), influences the flow, and consists of an outer ring (13) bearing against the inner circumference of the flow section (3) and multiple webs (14, 15) subdividing the annular cross section into multiple laterally closed apertures (16),
wherein at least some of the webs (15) are not parallel to the longitudinal axis of the flow section (3), with the web thickness being constant,
wherein the apertures (16) are rectangular in cross section, and
wherein the insert (12) has multiple first webs (14) which run parallel to one another and parallel to the longitudinal axis of the flow section (3) and between which there extend second webs (15), which are perpendicular to the first webs (14) for the purpose of forming the closed apertures (16) and of which at least some do not run parallel to the longitudinal axis of the flow section (3).

2. Ultrasonic meter according to Claim 1, **characterized in that** in each case at least one web (15) of each aperture (16) is not parallel to the longitudinal axis of the flow section (3).

3. Ultrasonic meter according to Claim 1 or 2, **characterized in that** the apertures (16) are square in cross section.

4. Ultrasonic meter according to Claim 1, **characterized in that** none of the second webs (15) run parallel to the longitudinal axis of the flow section (3).

5. Ultrasonic meter according to Claim 1 or 4, **characterized in that** at least some, preferably all, second webs (15) present in the region between two first webs (14) and not parallel to the longitudinal axis run in an identical manner with respect to the longitudinal axis.

6. Ultrasonic meter according to Claim 1 or 4, **characterized in that** at least some of the second webs (15) present in the region between two first webs (14) and not parallel to the longitudinal axis are tilted in different, preferably mutually opposite, directions with respect to the longitudinal axis.

7. Ultrasonic meter according to Claim 6, **characterized in that**, within one region, a first group of second webs (15) which are arranged adjacent to one another are tilted in a first direction, while a second group of second webs (15) which are arranged adjacent to one another are tilted in an opposite direction.

8. Ultrasonic meter according to one of Claims 5 to 7, **characterized in that** the second webs (15) of two adjacent regions are tilted in different directions with respect to the longitudinal axis.

9. Ultrasonic meter according to one of the preceding claims, **characterized in that**, in the flow section (3), there is provided a radial groove (17) in which the insert (12) is held.

10. Ultrasonic meter according to one of the preceding claims, **characterized in that**, on the insert, there are provided one or more latching elements (18) which latch on latching receptacles provided in the flow section (3), if appropriate in the radial groove.

11. Ultrasonic meter according to one of the preceding claims, **characterized in that**, on the insert (12), there is provided a rotation-prevention means (19), in particular a radial projection, which engages into a radial receptacle in the flow section (3), in particular in the radial groove.

12. Ultrasonic meter according to one of the preceding claims, **characterized in that** the insert (12) is a plastic injection-moulded part.

## Revendications

1. Compteur à ultrasons, comprenant un boîtier (2), pourvu d'une portion d'écoulement tubulaire (3) dans laquelle est inséré un insert de mesure (5) définissant une section de mesure (4), ainsi que deux transducteurs à ultrasons (6, 7) qui sont disposés côté boîtier et auxquels sont associés des réflecteurs (8, 9) disposés au niveau de l'insert de mesure (5),
un insert (12) étant placé dans la portion d'écoulement (3), lequel insert est monté en amont de l'insert de mesure (5), influe sur l'écoulement et comprend une bague extérieure (13), en appui sur la circonférence intérieure de la portion d'écoulement (3), et une pluralité de nervures (14,15) divisant la section transversale de la bague en une pluralité de passages (16) fermées latéralement,
au moins une partie des nervures (15) n'étant pas parallèle à l'axe longitudinal de la portion d'écoulement (3) pour une épaisseur de nervure constante,
les passages (16) ayant une section transversale rectangulaire et
l'insert (12) comportant une pluralité de premières nervures (14) qui s'étendent parallèlement les unes aux autres et parallèlement à l'axe longitudinal de la portion d'écoulement (3) et entre lesquelles des deuxièmes nervures (15), qui sont perpendiculaires aux premières nervures (14) et dont au moins une partie ne sont pas parallèles à l'axe longitudinal de la portion d'écoulement (3), s'étendent pour former les passages fermés (16).

2. Compteur à ultrasons selon la revendication 1, **caractérisé en ce qu'**au moins une nervure (15) de chaque passage (16) n'est pas parallèle à l'axe longitudinal de la portion d'écoulement (3).

3. Compteur à ultrasons selon la revendication 1 ou 2, **caractérisé en ce que** les passages (16) ont une section transversale carrée.

4. Compteur à ultrasons selon la revendication 1, **caractérisé en ce que** toutes les deuxièmes nervures (15) ne sont pas parallèles à l'axe longitudinal de la portion d'écoulement (3).

5. Compteur à ultrasons selon la revendication 1 ou 4, **caractérisé en ce qu'**au moins une partie, de préférence la totalité, des deuxièmes nervures (15) présentes dans la zone située entre deux premières nervures (14) et non parallèles à l'axe longitudinal, s'étendent de manière identique par rapport à l'axe longitudinal.

6. Compteur à ultrasons selon la revendication 1 ou 4, **caractérisé en ce qu'**au moins une partie des deuxièmes nervures (15) présentes dans la zone située entre deux premières nervures (14) et non parallèles à l'axe longitudinal sont inclinées dans des directions différentes, de préférence opposées, par rapport à l'axe longitudinal.

7. Compteur à ultrasons selon la revendication 6, **caractérisé en ce qu'**un premier groupe de deuxièmes nervures (15), qui sont disposées de manière adjacente les unes aux autres, sont inclinées dans une première direction, tandis qu'un deuxième groupe de deuxièmes nervures (15), qui sont disposées de manière adjacente les unes aux autres, sont inclinées dans une direction opposée.

8. Compteur à ultrasons selon l'une des revendications 5 à 7, **caractérisé en ce que** les deuxièmes nervures (15) de deux zones adjacentes sont inclinées dans des directions différentes par rapport à l'axe longitudinal.

9. Compteur à ultrasons selon l'une des revendications précédentes, **caractérisé en ce qu'**une rainure radiale (17), dans laquelle l'insert (12) est maintenu, est ménagée dans la portion d'écoulement (3).

10. Compteur à ultrasons selon l'une des revendications précédentes, **caractérisé en ce qu'**un ou plusieurs éléments d'encliquetage (18) sont prévus au niveau de l'insert, lesquels s'encliquètent au niveau de logements d'encliquetage prévus dans la portion d'écoulement (3), éventuellement de la rainure radiale.

11. Compteur à ultrasons selon l'une des revendications précédentes, **caractérisé en ce qu'**un blocage en rotation (19), notamment une saillie radiale, qui s'engage dans un logement radial ménagé dans la portion d'écoulement (3), en particulier de la rainure radiale, est prévu au niveau de l'insert (12).

12. Compteur à ultrasons selon l'une des revendications précédentes, **caractérisé en ce que** l'insert (12) est une pièce en matière synthétique moulée par injection.
